# EUROPÄISCHE PATENTSCHRIFT

(11) **EP 4 054 956 B1**
(45) Veröffentlichungstag und Bekanntmachung des Hinweises auf die Patenterteilung: **21.06.2023**
(21) Anmeldenummer: 21726642.8
(22) Anmeldetag: 18.05.2021
(51) Int. Cl.: B65D 88/02, B65D 90/00, E04B 1/348, E04H 1/12

(54) **PLATTFORM ZUM STAPELN VON CONTAINERN ALS GEHÄUSE VON KOMPONENTEN EINER ENERGIEUMWANDLUNGSANLAGE, UND ENERGIEUMWANDLUNGSANLAGE**
PLATFORM FOR STACKING CONTAINERS AS A HOUSING FOR COMPONENTS OF AN ENERGY CONVERSION SYSTEM, AND ENERGY CONVERSION SYSTEM
PLATEFORME POUR EMPILER DES CONTENEURS FAISANT OFFICE DE LOGEMENT POUR DES ÉLÉMENTS D'UN SYSTÈME DE CONVERSION D'ÉNERGIE, ET SYSTÈME DE CONVERSION D'ÉNERGIE

(30) Priorität: 09.06.2020 DE 102020115328
(43) Veröffentlichungstag der Anmeldung: 14.09.2022
(73) Patentinhaber: SMA Solar Technology AG, 34266 Niestetal (DE)
(72) Erfinder: KUEHMSTEDT, Janus, 34292 Ahnatal (DE)
(86) Internationale Anmeldenummer: PCT/EP2021/063086
(87) Internationale Veröffentlichungsnummer: WO 2021/249729

(56) Entgegenhaltungen:
- WO-A1-02/16230
- WO-A1-2012/045149
- DE-U1- 20 305 795
- DE-U1-202008 014 585
- GB-A- 1 018 663

## Beschreibung

Die Erfindung betrifft eine Plattform zum Stapeln von Containern als Gehäuse von Komponenten einer Energieumwandlungsanlage. Weiterhin betrifft die Erfindung eine Energieumwandlungsanlage mit einem Stapel von Containern mit dazwischen angeordneten Plattformen.

Die Energieerzeugung aus erneuerbaren Energiequellen, insbesondere aus Solarzellen, gewinnt zunehmend an Bedeutung und der Anteil der so gewonnenen elektrischen Leistung in den Netzen steigt ständig. Hierfür sind Wechselrichter mit einer Wandlerleistung im Bereich mehrerer Megawatt häufig in Gehäusen mit standardisierten Abmaßen beziehungsweise standardisierten Aufnahmepunkten eines Frachtcontainers, insbesondere eines standardisierten Luft- oder Seefrachtcontainers, integriert. Passend gestaltete containerartige Gehäuse erlauben einen Transport mit einer etablierten Transport- und Verladelogistik und bieten der Leistungselektronik gleichzeitig ausreichenden Schutz gegen Witterungseinflüsse, sowohl während des Transports als auch während des Betriebs. Wechselrichter im Containergehäuse werden hierbei regelmäßig auf geeignet gestaltete Fundamente auf dem Erdboden installiert, so dass sie für die Installation und für Wartungszwecke leicht zugänglich sind. Mehrere Container - im Folgenden werden unter dem Begriff Container Gehäuse mit standardisierten Abmaßen und mit standardisierten Aufnahmepunkten an standardisierten Orten entsprechend den Spezifikationen für Frachtcontainer verstanden, auch wenn beispielsweise das Gehäuse nur als Plattform mit einem Rahmen gestaltet ist - werden entsprechend nebeneinander mit ausreichendem Abstand installiert. Gleiches gilt für Energieumwandlungsanlagen mit Speicherfunktion, bei denen Wechselrichter mit Energiespeichern ausgestattet sind, insbesondere Batterien, die ebenfalls in Containern integriert sind, und die nahe an den mit ihnen elektrisch verbundenen Wechselrichtern installiert werden.

Ist es nun erforderlich, eine hohe Anzahl an Containern auf geringem Raum zu platzieren, stößt die Anordnung aller Container nebeneinander auf der Erde an seine Grenzen, unter anderem weil dann ein zu geringer Abstand der Container untereinander den Zugang zu den einzelnen Containern zu Installations- oder Wartungszwecken zu stark einschränkt und/oder weil eine ausreichende Entwärmung der elektronischen Komponenten in den Containern nicht mehr möglich ist. Eine solch hohe Containerdichte kann zum Beispiel in einer Energieumwandlungsanlage erreicht werden, die in direkter räumlicher Nähe zu einem Verbraucher mit sehr hoher Verbrauchsleistung angeordnet ist, und die das an den Verbraucher angeschlossenen Netz stabilisiert. Ein anderes Anwendungsbeispiel für eine Energieumwandlungsanlage mit einer hohen Containerdichte kann eine Anlage zur Netzstützung mit Hilfe einer Bereitstellung von Blind- und/oder Wirkleistung für einen Netzabschnitt in einem städtischen Bereich sein.

Eine mögliche Anordnung der Container, die eine höhere Containerdichte bei gleichzeitig ausreichende Entwärmung grundsätzlich ermöglicht, ist das Stapeln der Container übereinander. Hierdurch entsteht dann aber das Problem, dass die nicht auf der Erde angeordneten Container nur schlecht zum Beispiel zu Wartungszwecken erreichbar sind.

Zur Herstellung der Begehbarkeit von gestapelten Containern offenbaren die Dokumente US 2019/0148819 A1, US 2019/0119903 A1 und DE 203 05 795 U1 unterschiedliche Anordnungen von Brüstungen und Galerien, die seitlich an den Container auf den jeweiligen Stapelniveaus angeordnet sind. Neben den Containern angeordnete Stützstrukturen, die bis zum Boden reichen, verleihen den offenbarten Konstruktionen eine ausreichende Belastbarkeit.

Weiterhin ist aus der Schrift WO 02/16230 A1 eine Plattform zum beabstandeten vertikalen Stapeln von Containern für Transportzwecke offenbart. Darüber hinaus offenbart das Dokument GB 1 018 663 A ein Gebäude mit zwei oder mehr Stockwerken, wobei Galerien oder Balkone von zwischen den Stockwerken aus dem Gebäude herausragenden Balken getragen werden.

Es ist daher Aufgabe dieser Erfindung, eine Plattform als Komponente eines Baukastensystems zum Stapeln von Containern aufzuzeigen, das eine ausreichende Zugänglichkeit auch von Containern ermöglicht, die nicht auf dem Erdboden angeordnet sind, und die gleichzeitig eine ausreichende Entwärmung des Containerstapels ermöglicht. Weiterhin ist es Aufgabe dieser Erfindung, eine Energieumwandlungsanlage aufzuzeigen, die einen mit Hilfe einer solchen Plattform hergestellten Stapel von Containern aufweist.

Diese Aufgabe wird gelöst durch eine Plattform mit den Merkmalen des unabhängigen Anspruchs 1. Weiterhin wird diese Aufgabe gelöst durch eine Energieumwandlungsanlage (beispielsweise eine Anlage zur Netzstützung oder ein Energieversorgungssystem für eine Elektrolyseanlage oder eine Elektrolyseanlage mit Energieversorgungssystem oder eine Anlage zur unterbrechungsfreien Stromversorgung) mit den Merkmalen des Anspruchs 7. Bevorzugte Ausführungsformen sind in den abhängigen Ansprüchen dargestellt.

In einem ersten Aspekt dient eine erfindungsgemäße Plattform zur platzsparenden Ausbildung einer Energieumwandlungsanlage, indem Container als Gehäuse von Komponenten der Energieumwandlungsanlage unter Zwischenanordnung der Plattform übereinandergestapelt werden. Die Plattform weist eine Rahmenkonstruktion auf, die auf einer ersten Seite erste Ausrichtelemente zum Abstellen der Plattform auf einem ersten Container und auf einer zweiten, der ersten Seite gegenüberliegenden Seite der Rahmenkonstruktion zweite Ausrichtelemente zum Abstellen eines zweiten Containers auf einer Stellfläche der Rahmenkonstruktion umfasst. Die ersten Ausrichtelemente werden bevorzugt als standardisierte Containerecken, sogenannte *corner castings,* ausgeführt, wie sie bei Frachtcontainern eingesetzt werden. Analog werden die zweiten Ausrichtelemente bevorzugt in einer Form ausgeführt, die eine justierende und fixierende Aufnahme der standardisierten Containerecken ermöglichen, beispielsweise als sogenannte *Twistlocks,* ausgeführt. Die ersten und zweiten Ausrichtelemente sind derart angeordnet, dass sie zu einer lateral zentrierten und vertikal um eine Höhe der Plattform beabstandeten Anordnung des zweiten Containers über dem ersten Container führen, so dass auch mehrere Container übereinander gestapelt werden können, ohne dass der Stapel droht, aus dem Gleichgewicht zu geraten und umzustürzen.

Durch die Beabstandung übereinander angeordneter Container kann eine verbesserte Wärmeabfuhr aus den Containern sichergestellt werden. Eine Höhe der Plattform zwischen 30 cm und 1 m kann in der Regel eine ausreichende Wärmeabfuhr sicherstellen. Eine weitere Verbesserung der Wärmeabfuhr aus der Energieumwandlungsanlage kann dadurch erreicht werden, dass die Standfläche durch Einlegen von Bodenplatten in die Rahmenkonstruktion in Form von Lastgittern gebildet ist. Da Lastgitter luftdurchlässig sind, ist ein Luftaustausch auch in vertikaler Richtung gewährleistet. Weiterhin wird Regenwasser im Bereich der Plattform nicht gesammelt, so dass keine gesonderten Maßnahmen für eine Drainage erforderlich sind.

Die Rahmenkonstruktion bildet eine die Stellfläche umlaufend umgebende, für Personen begehbare Standfläche als Zugang zum zweiten Container aus. Hierdurch kann beispielsweise Wartungspersonal Installations- und Wartungsarbeiten auch dann einfach an den in den Containern enthaltenen Komponenten der Energieumwandlungsanlage ausführen, wenn diese nicht direkt auf dem Boden stehen. Um ausreichend Bewegungsfreiraum für das Personal zur Durchführung dieser Arbeiten vorzusehen, sollte die Standfläche eine Breite von mindestens 1 m, bevorzugt mindestens 1,5 m aufweisen. Vorteilhafterweise weist die Standfläche auch eine ausreichende Tragfähigkeit für mechanische Lasten auf, die durch darauf abgestellte Ersatzteile oder Werkzeug zur Durchführung der Installations- und Wartungsarbeiten an der Energieumwandlungsanlage verursacht werden.

Zur Sicherheit des die Standflächen benutzenden Personal gegen Absturz können an der Plattform Befestigungselemente für ein die Standfläche seitlich begrenzendes Geländer vorgesehen sein. Bei Bedarf oder dauerhaft kann dann einfach ein solches Geländer angebracht werden.

In einer vorteilhaften Ausführung weist die erfindungsgemäße Plattform im Bereich der Stellfläche Halteelemente zur Zuführung von Zuleitungen zu den Containern auf. Die Halteelemente können beispielsweise als Schellen oder Klemmen ausgeführt sein und dienen dazu, die Enden der Zuleitungen an vorgegebenen Positionen der Plattform zu platzieren, bevor ein Container auf den zweiten Ausrichtelementen abgestellt wird. Diese Positionen entsprechen dann den Bereichen, in denen die Anschlüsse für die Zuleitungen im zweiten Container angeordnet sind, so dass ein einfacher Anschluss der Zuleitungen im zweiten Container nach dessen Abstellen ermöglicht wird. Die Zuleitungen können beispielsweise elektrische Leitungen, Gasleitungen oder Zuleitungen von Betriebsmedien der Energieumwandlungsanlage sein.

In einem weiteren Aspekt umfasst eine erfindungsgemäße Energieumwandlungsanlage, die zum Austausch elektrischer Leistung mit einem Netz eingerichtet ist, einen Stapel von mindestens zwei Containern als Gehäuse von Komponenten der Energieumwandlungsanlage, zwischen denen eine vorstehend beschriebene Plattform angeordnet ist. Über die Plattform ist sowohl ein elektrischer Anschluss und/oder Medienanschluss des oberen Containers geführt, als auch ein Zugang zum oberen Container zur Durchführung von Arbeiten an diesem möglich.

Bevorzugt umfasst mindestens einer der Container einen Wechselrichter. Es ist ebenfalls denkbar, dass mindestens einer der Container einen Speicher, beispielsweise eine Mehrzahl von Batteriezellen, aufweist. Hierbei ist auch nicht ausgeschlossen, dass eine erfindungsgemäße Energieumwandlungsanlage sowohl einen Speicher als auch einen Wechselrichter aufweist, und dass ein Container auch beide diese Komponenten enthält. Eine erfindungsgemäße Energieumwandlungsanlage kann beispielsweise zur Bereitstellung von Blindleistung in dem Netz und/oder zur Frequenzstabilisierung des Netzes eingerichtet sein. Sie kann aber auch als USV-Anlage (Unterbrechungsfreie Stromversorgung) ausgeführt sein, die Entkopplungselemente zum Netz, Energieumformer und Energiespeicher aufweist.

In einer weiteren erfindungsgemäßen Ausführung umfasst mindestens einer der Container der Energieumwandlungsanlage eine Elektrolyseanlage. In diesem Fall kann elektrische Leistung des angeschlossenen Netzes zur Herstellung von Wasserstoff eingesetzt werden. Durch die Anordnung der Container als Stapel kann eine solche Energieumwandlungsanlage bei geringem Platzbedarf einfach bedarfsgerecht in seiner Betriebsleistung skaliert werden.

Der Stapel einer erfindungsgemäßen Energieumwandlungsanlage kann mehr als zwei, insbesondere mehr als vier Container aufweisen, zwischen denen jeweils eine Plattform angeordnet ist. Besonders bevorzugt umfasst eine Energieumwandlungsanlage eine Mehrzahl von Stapeln, die nebeneinander angeordnet sind, so dass die Plattformen benachbarter Stapelanordnungen direkt aneinander angrenzen und eine gemeinsame Ebene von Standflächen gebildet wird. Gegebenenfalls zwischen den Plattformen entstehende Spalte können beispielsweise durch Bleche überdeckt werden. Es ist auch denkbar, die Stabilität der Stapelanordnung durch eine, insbesondere elastische, Verbindung, beispielsweise eine Verschraubung oder ein Einsatz von Pufferelementen, zwischen den Plattformen benachbarter Stapel zu erhöhen.

Benachbarte Stapel können sich insbesondere auch in zwei laterale Richtungen erstrecken, so dass ein Cluster von Containern mit gemeinsamen Plattform-Ebenen gebildet wird. Die Stapel können hierbei von einer Fassade zur Ausbildung einer Gebäudestruktur eingefasst sein. In einem Außenbereich der Stapelcluster kann ein gemeinsamer Zugang zu den Plattform-Ebenen durch eine Treppe oder einen Aufzug realisiert werden.

Im Folgenden wird die Erfindung mithilfe von Figuren dargestellt, von denen
- Fig. 1: eine erfindungsgemäße Ausführung einer Plattform in mehreren Ansichten,
- Fig. 2: eine perspektivische Ansicht von zwei Containern einer Energieumwandlungsanlage mit dazwischen angeordneter Plattform,
- Fig. 3: eine erfindungsgemäße Energieumwandlungsanlage mit einer mittels einer Plattform gestapelten Anordnung von zwei Containern, sowie
- Fig. 4: eine erfindungsgemäße Energieumwandlungsanlage mit nebeneinander angeordneten Stapeln von Containern, sowie
- Fig. 5: eine als Gebäudestruktur ausgebildete Energieumwandlungsanlage mit nebeneinander angeordneten Stapeln von Containern zeigen.

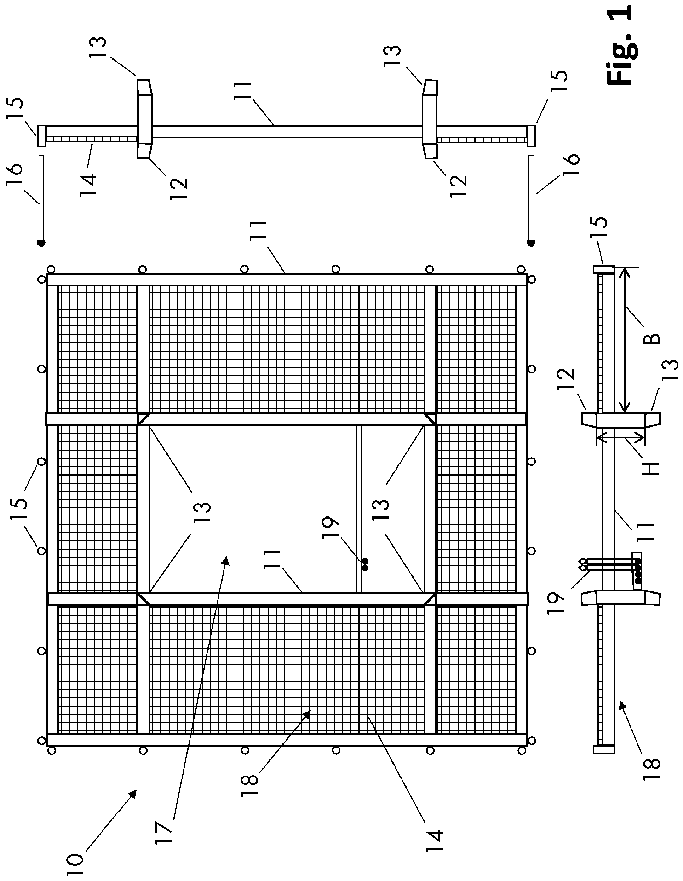

Fig. 1 zeigt eine erfindungsgemäße Ausführung einer Plattform 10, die eine Rahmenkonstruktion aus einer Mehrzahl von miteinander fest verbundenen Trägern 11 aufweist, die eine Standfläche definiert. Die Plattform 10 ist in einer Aufsicht und zwei Seitenansichten, unter der Aufsicht und rechts davon, gezeigt. Die Plattform 10 weist einen Innenbereich 17 auf, an dessen Eckpunkten sowohl auf einer Oberseite der Rahmenkonstruktion obere Ausrichtelemente 12 als Aufnahmepunkte für Container angeordnet sind, die derart gestaltet sind, dass ein erster Container 20 auf den Ausrichtelementen in einer definierten Position gelagert werden kann. Die oberen Ausrichtelemente 12 können beispielsweise als *Twistlocks* ausgeführt sein. Auf einer Unterseite der Plattform sind ebenfalls untere Ausrichtelemente 13 angeordnet, mit denen die Plattform 10 auf einen zweiten Container 20 abgestellt werden kann. Die unteren Ausrichtelemente 12 können beispielsweise als *corner castings* ausgeführt sein. Die oberen Ausrichtelemente 12 und die unteren Ausrichtelemente 13 sind dabei in einer Richtung senkrecht zur Standfläche um eine Höhe H voneinander beabstandet, so dass die Plattform einen Abstand entsprechend der Höhe H zwischen den beiden Containern definiert. In einem den Innenbereich umgebenden Außenbereich 18 der Plattform 10 sind Bodenplatten 14 auf die Rahmenkonstruktion gelegt, so dass der Außenbereich 18 in einer Breite B begehbar gestaltet ist, und eine Standfläche bilden, so dass dort insbesondere auch Lasten abgestellt werden können. Die Bodenplatten 14 können aus luftdurchlässigen Lastgittern bestehen. Es ist hierbei auch denkbar, dass die Rahmenkonstruktion nur an einer, zwei oder drei Seiten des Innenbereichs 17 eine Standfläche in Form eines begehbaren beziehungsweise belastbaren Außenbereichs 18 aufweist.

Weiterhin weist die Plattform Führungselemente auf, beispielsweise Kabelkanäle, mit deren Hilfe die Zuleitungen 19 zu den Containern geführt werden. Im Innenbereich 17 sind Halteelemente zum Beispiel an einer Querstrebe der Rahmenkonstruktion angeordnet, um die Zuleitungen 19 an einer vorgegebenen Position der Plattform zu fixieren, an der sich ein Anschlussbereich eines auf der Oberseite der Rahmenkonstruktion auf den Aufnahmepunkten abgestellten Containers befindet. Auf diese Weise kann ein einfacher Anschluss des Containers über die Zuleitungen bewerkstelligt werden. Ein Anschluss kann ein elektrischer Anschluss beispielsweise an ein Wechselspannungsnetz oder an einen Gleichspannungsbus sein. Es ist aber auch denkbar, dass die Zuleitungen andere Medien, beispielsweise Kühlflüssigkeit oder Gase, zuführen beziehungsweise abführen.

Entlang den äußeren Trägern 11 sind weiterhin Befestigungselemente für ein Geländer 16 in Form von Hülsen 15 angebracht, in die Geländerstangen des Geländers 16 eingeführt werden können. Diese Befestigungselemente können umlaufend an allen Seiten der Plattform 10, nur an einigen Seiten oder an keiner Seite angeordnet sein.

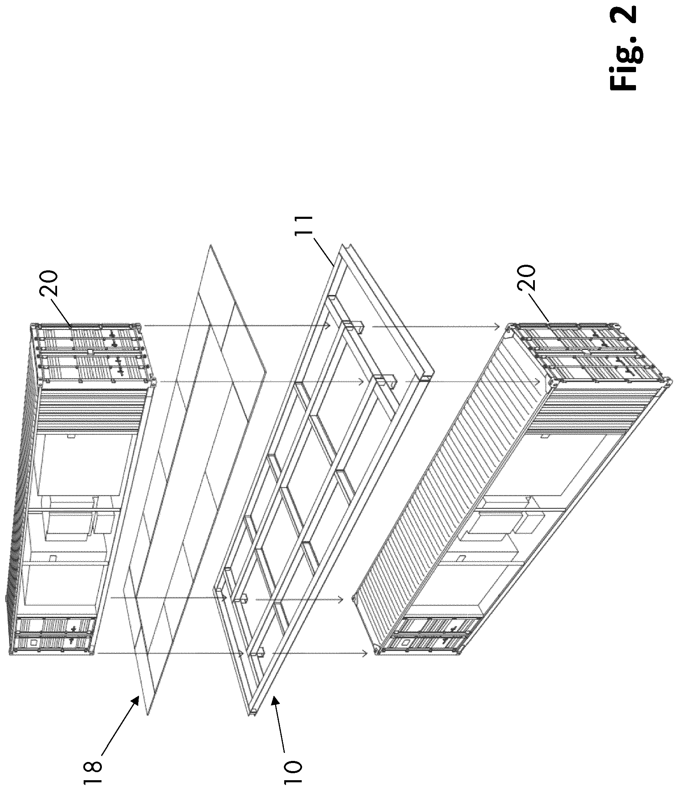

Die Anordnung von Containern 20 und Plattform 10 ist in Fig. 2 in perspektivischer Darstellung in einem weiteren Detaillierungsgrad gezeigt. Die Rahmenkonstruktion 11 der Plattform 10 wird mit den unteren Ausrichtelementen auf den Aufnahmepunkten des in der Fig. 2 unteren Containers 20 abgestellt. Der obere Container wird dann auf den oberen Ausrichtelementen der Plattform 10 in einer zum unteren Container justierten Position abgestellt. Durch Einlegen von Bodenplatten 18 in die Rahmenkonstruktion 11 der Plattform 10 wird eine begehbare Standfläche gebildet, die vollständig um die Plattform 10 herum verläuft und so einen allseitigen Zugang zum oberen Container ermöglicht.

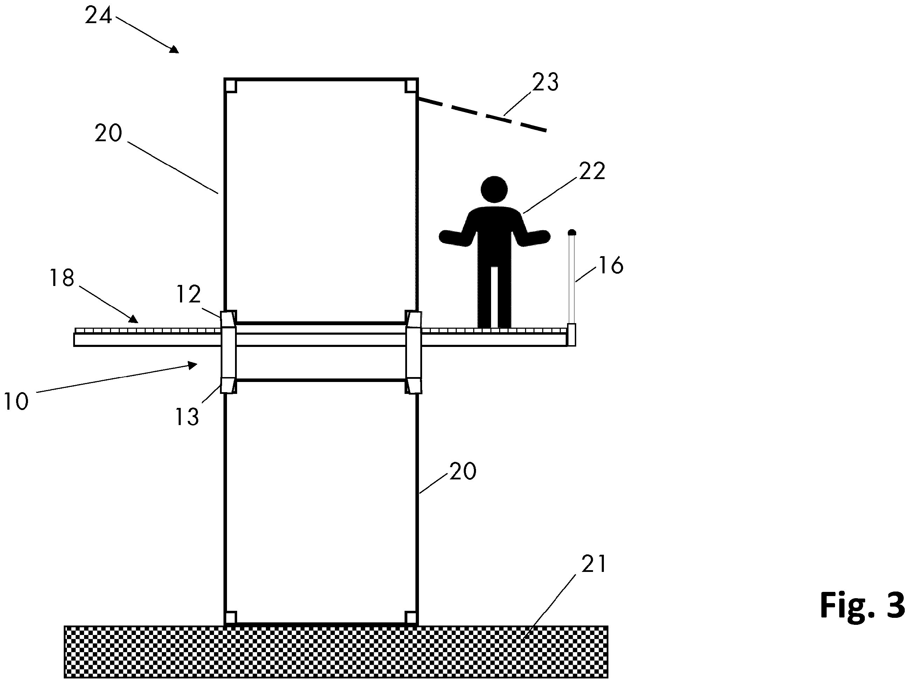

Fig. 3 zeigt eine Energieumwandlungsanlage 24, die zwei Anlagenkomponenten aufweist, die in Containern 20 als Komponentengehäuse angeordnet sind. Die Anlagenkomponenten können leistungselektronische Schaltungen umfassen, insbesondere Wechselrichter sein oder als Bestandteil aufweisen, und/oder beispielsweise auch Energiespeicher umfassen. Auch ein elektrischer Verbraucher wie eine Elektrolyseeinheit können als Komponente in den Containern enthalten sein. Ein erster Container 20 ist hierbei auf einem Fundament 21 platziert. In dem Fundament 21 können Anschlusselemente zum elektrischen Anschluss der leistungselektronischen Schaltung oder des Energiespeichers integriert sein.

Auf einer Oberseite des ersten Containers 20 ist eine erfindungsgemäße Plattform 10 so abgestellt, dass die unteren Ausrichtelemente 13 der Plattform auf den standardisierten Aufnahmepunkte des Containers 20, die sich an den Ecken befinden, abgestellt sind, und so die Plattform 10 eine definierte Position gegenüber dem ersten Container einnimmt. Auf den oberen Ausrichtelementen 12 der Plattform 10 ist mit den Containerecken ein zweiter Container 20 abgestellt, der so ebenfalls eine definierte Position einnimmt, und lateral justiert über dem ersten Container 20 angeordnet ist. Durch die lateral justierte Anordnung ist es möglich, auf dem oberen Container eine weitere Plattform und einen weiteren Container abzustellen, und so einen Stapel mit einer Mehrzahl von Containern zu bilden. Je nach Gewichtsbelastbarkeit der Container beziehungsweise der Plattformen und nach Stabilitätsanforderung gegenüber einer seitlichen Kraft, beispielsweise durch Seitenwind, können Stapel von fünf oder mehr Containern gebildet werden. Auch der oder die oberen Container 20 werden mit Verbindungsleitungen (nicht gezeigt) elektrisch angeschlossen, wobei die Plattform 10 Halteelemente beziehungsweise Führungselemente für die Verbindungsleitungen aufweisen kann.

Der Außenbereich 18 der Plattform 10 als begehbare und belastbare Standfläche ermöglicht einer Person 22 einen seitlichen Zugang zu dem oberen Container 20. Durch eine Wartungsklappe 23 hat die Person 22 auch Zugang zum Innenraum des Containers 20 und kann dort beispielsweise Installations- oder Wartungsarbeiten in einer Höhe über dem Fundament 21 vornehmen, in der sonst eine mobile Arbeitsplattform erforderlich wäre. Der Zugang zu der Standfläche kann über eine Treppe oder eine Leiter erfolgen.

Durch einen ausreichend gewählten Abstand zwischen den Containern 20, sowie durch die luftdurchlässigen Bodenplatten 14 kann eine effektive Entwärmung aller Container 20 sichergestellt werden, da ein im Wesentlichen ungehinderter Luftaustausch erfolgen kann. Auch eine Ableitung von Niederschlagswasser muss nur auf der Ebene des Fundaments 21 erfolgen.

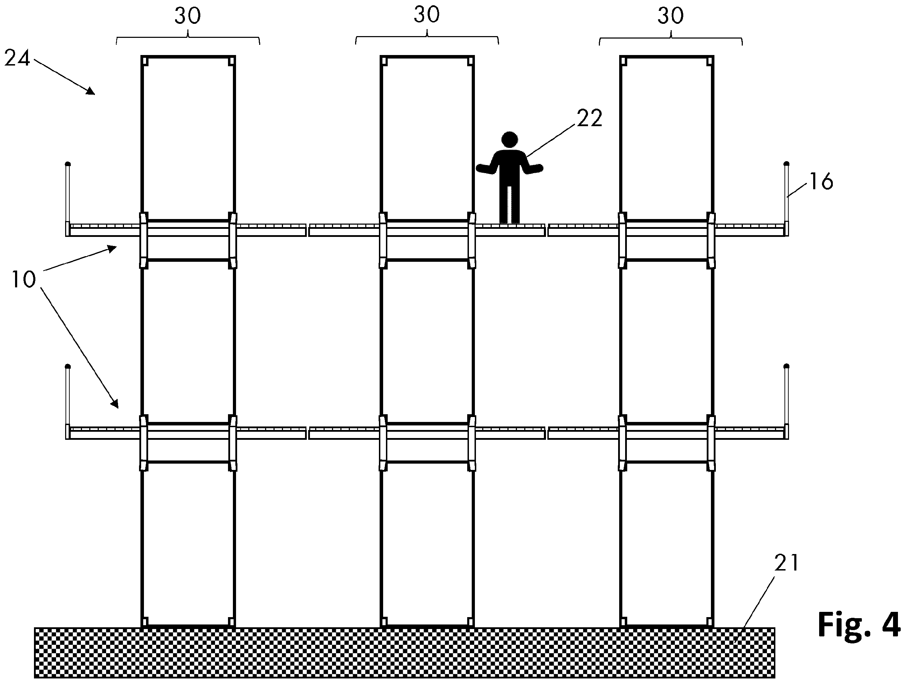

Wie in Fig. 4 gezeigt, können eine Mehrzahl Stapel 30 von Containern 20 und Plattformen 10 nebeneinander beziehungsweise hintereinander auf ein Fundament 21 gestellt werden und eine gemeinsame Energieumwandlungsanlage 24 bilden, wobei sich die Stapel dann in einer oder zwei horizontalen Richtungen aneinanderreihen. Die Plattformen 10 der nebeneinander beziehungsweise hintereinander angeordneten Stapel 30 bilden dann eine zusammenhängende Ebene von Standflächen, wobei zwischen den benachbarten Plattformen ein Spalt verbleibt, der bei Bedarf beispielsweise mit Blechen abgedeckt werden kann. Ein Geländer 16 ist dann nur an den Außenseiten der Stapel 30 erforderlich. Ein Zugang, beispielsweise ein Treppenzugang, zu den Ebenen der Standflächen kann ebenfalls an der Außenseite angeordnet sein.

Bei der in Fig. 4 gezeigten Anordnung ist es weiterhin möglich, mit wenig Aufwand einen beliebigen Container 20 auszutauschen, indem dieser nach Auftrennung der elektrischen Anschlüsse mittels eines Krans vertikal aus der Anordnung gehoben wird, nachdem gegebenenfalls darüberliegende Plattformen und Container ebenfalls vertikal herausgehoben wurden. Die darüberliegenden Container 20 werden zwischenzeitlich abgestellt, der betroffenen Container getauscht und die Container jeweils mit einer dazwischen angeordneten Plattform wieder als Stapel innerhalb der Anordnung aufeinander abgestellt. Danach werden die Container 20 wieder elektrisch angeschlossen.

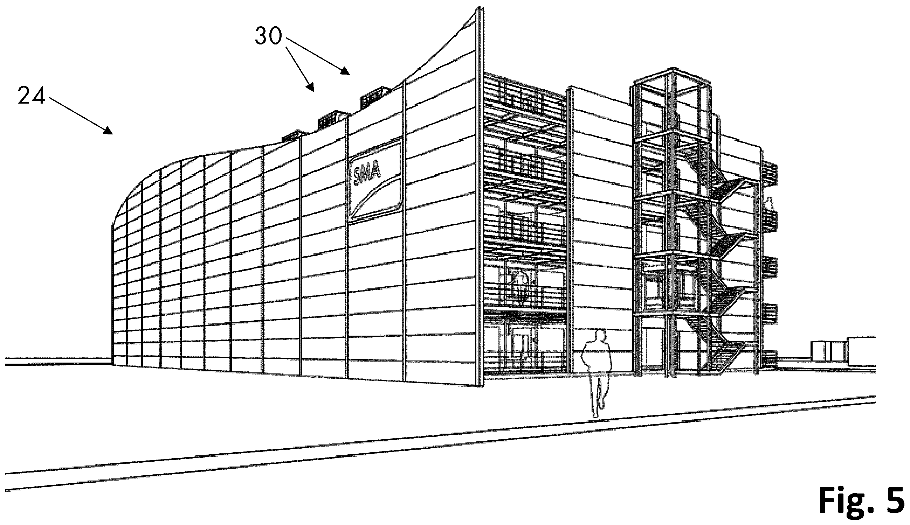

Die in Fig. 4 gezeigte Anordnung kann als Gebäudestruktur ausgebildet werden, indem an der Außenseite der Mehrzahl von Stapeln 30 eine Fassade angebracht wird, die neben einer optischen Verkleidung auch zur mechanischen Stabilität der Anordnung beiträgt. Eine solche Gebäudestruktur ist in Fig. 5 gezeigt. Eine Treppe oder ein Aufzug können ebenfalls an der Außenseite in die Gebäudestruktur integriert werden. In einer weiteren Ausführung können Stapel von Containern auch an der Außenseite eines Gebäudes angeordnet sein.

Die Container 20 eines Stapels 30 können eine funktionale Einheit bilden, beispielsweise einen Wechselrichter und alle an diesen Wechselrichter gleichspannungsseitig angeschlossenen Energiespeicher aufweisen. So kann die Energieumwandlungsanlage 24 durch Hinzufügen weiterer Stapel einfach erweitert werden.

### Bezugszeichenliste

- 10: Plattform
- 11: Träger

- 12, 13: Ausrichtelement
- 14: Bodenplatte
- 15: Hülse
- 16: Geländer
- 17: Innenbereich
- 18: Außenbereich
- 19: Zuleitung
- 20: Container
- 21: Fundament
- 22: Person
- 23: Wartungsklappe
- 24: Energieumwandlungsanlage

- 30: Stapel

## Patentansprüche

1. Plattform (10) zur platzsparenden Ausbildung einer Energieumwandlungsanlage (24), indem Container (20) als Gehäuse von Komponenten der Energieumwandlungsanlage (24) unter Zwischenanordnung der Plattform (10) übereinander gestapelt werden, wobei die Plattform eine Rahmenkonstruktion aufweist, die auf einer ersten Seite erste Ausrichtelemente (13) zum Abstellen der Plattform (10) auf einem ersten Container (20) und auf einer zweiten, der ersten Seite gegenüberliegenden Seite der Rahmenkonstruktion zweite Ausrichtelemente (12) zum Abstellen eines zweiten Containers (20) auf einer Stellfläche der Rahmenkonstruktion aufweist,
wobei die ersten und zweiten Ausrichtelemente (12, 13) derart angeordnet sind, dass sie zu einer lateral zentrierten und vertikal um eine Höhe (H) der Plattform (10) beabstandeten Anordnung des zweiten Containers über dem ersten Container führen, **dadurch gekennzeichnet, dass** die Rahmenkonstruktion eine die Stellfläche umlaufend umgebende, für Personen begehbare Standfläche als Zugang zum zweiten Container (20) ausbildet.

2. Plattform (10) nach Anspruch 1, wobei die Standfläche durch Einlegen von Bodenplatten (14) in Form von Lastgittern gebildet ist.

3. Plattform (10) nach Anspruch 1 oder 2, wobei die Plattform (10) im Bereich der Stellfläche Halteelemente zur Zuführung von Zuleitungen (19) zu den Containern (20) vorgesehen sind.

4. Plattform (10) nach einem der vorhergehenden Ansprüche, wobei an der Plattform (10) Befestigungselemente für ein die Standfläche seitlich begrenzendes Geländer (16) vorgesehen sind.

5. Plattform (10) nach einem der vorhergehenden Ansprüche, wobei die Höhe (H) der Plattform (10) zwischen 30 cm und 100 cm gewählt ist.

6. Plattform (10) nach einem der vorhergehenden Ansprüche, wobei eine Breite (B) der Standfläche mindestens 1 m, bevorzugt mindestens 1,5 m beträgt.

7. Energieumwandlungsanlage (24) zum Austausch elektrischer Leistung mit einem Netz, umfassend einen Stapel (30) von zwei Containern (20) als Gehäuse von Komponenten der Energieumwandlungsanlage (24), zwischen denen eine Plattform (10) nach einem der vorhergehenden Ansprüche angeordnet ist.

8. Energieumwandlungsanlage (24) nach Anspruch 7, wobei mindestens einer der Container (20) einen Wechselrichter und/oder einen Speicher umfasst.

9. Energieumwandlungsanlage (24) nach Anspruch 7 oder 8, eingerichtet zur Bereitstellung von Blindleistung in dem Netz und/oder zur Frequenzstabilisierung des Netzes.

10. Energieumwandlungsanlage (24) nach einem der Ansprüche 7 bis 9, ausgeführt als unterbrechungsfreie Stromversorgungsanlage, die Entkopplungselemente zum Netz, Energieumformer und Energiespeicher aufweist.

11. Energieumwandlungsanlage (24) nach einem der Ansprüche 7 bis 10, wobei mindestens einer der Container eine Elektrolyseanlage umfasst.

12. Energieumwandlungsanlage (24) nach einem der Ansprüche 7 bis 11, wobei der Stapel (30) mehr als zwei Container (20) aufweist, zwischen denen jeweils eine Plattform (10) angeordnet ist.

13. Energieumwandlungsanlage (24) nach einem der Ansprüche 7 bis 12, umfassend eine Mehrzahl von Stapeln (30), die nebeneinander derart angeordnet sind, dass die Plattformen (10) benachbarter Stapelanordnungen direkt aneinander angrenzen, so dass eine gemeinsame Ebene von Standflächen gebildet wird.

14. Energieumwandlungsanlage (24) nach Anspruch 13, wobei sich in zwei laterale Richtungen benachbarte Stapel (30) erstrecken.

15. Energieumwandlungsanlage (24) nach Anspruch 13 oder 14, wobei die Stapel (30) von einer Fassade zur Ausbildung einer Gebäudestruktur eingefasst sind.

## Claims

1. Platform (10) for the space-saving design of an energy conversion system (24), in that containers (20) are stacked as housings of components of the energy conversion system (24), one above the other, with the platform (10) arranged between the containers, wherein the platform (10) has a frame structure which has, on a first side, first alignment elements (13) for placing the platform (10) on a first container (20) and, on a second side, opposite the first side, of the frame structure, second alignment elements (12) for placing a second container (20) on a placement area of the frame structure, wherein the first and second alignment elements (12, 13) are arranged in such a way that they result in an arrangement, which is laterally centered and vertically spaced apart by a height (H) of the platform (10), of the second container above the first container, **characterised in that** the frame structure forms a standing area, which circumferentially surrounds the placement area and is walkable by persons, as access to the second container (20).

2. Platform (10) according to claim 1, wherein the standing area is formed by inserting base plates (14) in the form of load gratings.

3. Platform (10) according to claim 1 or 2, wherein the platform (10), in the region of the placement area, is provided with holding elements for guiding supply lines (19) to the containers (20).

4. Platform (10) according to one of the preceding claims, wherein fastening elements for a railing (16) that laterally delimits the standing area are provided on the platform (10).

5. Platform (10) according to one of the preceding claims, wherein the height (H) of the platform (10) is selected to be between 30 cm and 100 cm.

6. Platform (10) according to one of the preceding claims, wherein a width (B) of the standing area is at least 1 m, and preferably at least 1.5 m.

7. Energy conversion system (24) for exchanging electrical power with a grid, comprising a stack (30) of two containers (20) as housings of components of the energy conversion system (24), between which containers a platform (10) according to one of the preceding claims is arranged.

8. Energy conversion system (24) according to claim 7, wherein at least one of the containers (20) comprises an inverter and/or a store.

9. Energy conversion system (24) according to claim 7 or 8, configured to provide reactive power in the grid and/or to stabilize the frequency of the grid.

10. Energy conversion system (24) according to one of claims 7 through 9, designed as an uninterruptible power supply system that has decoupling elements to the grid, energy transducers, and energy stores.

11. Energy conversion system (24) according to one of claims 7 through 10, wherein at least one of the containers comprises an electrolysis system.

12. Energy conversion system (24) according to one of claims 7 through 11, wherein the stack (30) has more than two containers (20), between each of which a platform (10) is arranged.

13. Energy conversion system (24) according to one of claims 7 through 12, comprising a plurality of stacks (30) arranged next to one another in such a way that the platforms (10) of adjacent stack arrangements directly adjoin one another so that a common level of standing areas is formed.

14. Energy conversion system (24) according to claim 13, wherein adjacent stacks (30) extend in two lateral directions.

15. Energy conversion system (24) according to claim 13 or 14, wherein the stacks (30) are enclosed by a facade in order to form a building structure.

## Revendications

1. Plate-forme (10) pour la réalisation peu encombrante d'une installation de conversion d'énergie (24), en ce que des conteneurs (20) sont empilés les uns sur les autres en tant que boîtiers de composants de l'installation de conversion d'énergie (24) avec un agencement intermédiaire de la plate-forme (10), la plate-forme présentant une construction de cadre qui présente, sur un premier côté, des premiers éléments d'alignement (13) pour poser la plate-forme (10) sur un premier conteneur (20) et, sur un deuxième côté, des deuxièmes éléments d'alignement (12) pour poser la plate-forme (10) sur une surface de montage, côté de la structure de cadre opposé au premier côté, des deuxièmes éléments d'alignement (12) pour déposer un deuxième conteneur (20) sur une surface de pose de la structure de cadre, les premiers et deuxièmes éléments d'alignement (12, 13) étant disposés de telle sorte qu'ils conduisent à une disposition du deuxième conteneur centrée latéralement et espacée verticalement d'une hauteur (H) de la plate-forme (10) au-dessus du premier conteneur, **caractérisé en ce que** la structure de cadre forme une surface de pose entourant la surface de pose et praticable par des personnes comme accès au deuxième conteneur (20).

2. Plate-forme (10) selon la revendication 1, dans laquelle la surface d'appui est formée par l'insertion de plaques de base (14) sous forme de grilles de charge.

3. Plate-forme (10) selon la revendication 1 ou 2, la plate-forme (10) comportant, dans la zone de la surface de pose, des éléments de retenue pour l'amenée de conduites d'alimentation (19) vers les conteneurs (20).

4. Plate-forme (10) selon l'une des revendications précédentes, dans laquelle des éléments de fixation pour un garde-corps (16) délimitant latéralement la surface d'appui sont prévus sur la plate-forme (10).

5. Plate-forme (10) selon l'une des revendications précédentes, dans laquelle la hauteur (H) de la plate-forme (10) est comprise entre 30 cm et 100 cm.

6. Plate-forme (10) selon l'une des revendications précédentes, dans laquelle une largeur (B) de la surface d'appui est d'au moins 1 m, de préférence d'au moins 1,5 m.

7. Installation de conversion d'énergie (24) pour l'échange de puissance électrique avec un réseau, comprenant un empilement (30) de deux conteneurs (20) servant à contenir des composants de l'installation de conversion d'énergie (24), entre lesquels est disposée une plate-forme (10) selon l'une des revendications précédentes.

8. Installation de conversion d'énergie (24) selon la revendication 7, dans laquelle au moins un des conteneurs (20) comprend un onduleur et/ou un accumulateur.

9. Installation de conversion d'énergie (24) selon la revendication 7 ou 8, aménagée pour fournir de la puissance réactive dans le réseau et/ou pour stabiliser la fréquence du réseau.

10. Installation de conversion d'énergie (24) selon l'une des revendications 7 à 9, réalisée sous la forme d'une installation d'alimentation électrique sans coupure, qui comporte des éléments de découplage par rapport au réseau, des convertisseurs d'énergie et des stockages d'énergie.

11. Installation de conversion d'énergie (24) selon l'une quelconque des revendications 7 à 10, dans laquelle au moins un des conteneurs comprend une installation d'électrolyse.

12. Installation de conversion d'énergie (24) selon l'une des revendications 7 à 11, dans laquelle l'empilement (30) comprend plus de deux conteneurs (20) entre chacun desquels est disposée une plate-forme (10).

13. Installation de conversion d'énergie (24) selon l'une des revendications 7 à 12, comprenant une pluralité d'empilements (30) disposés côte à côte de telle sorte que les plates-formes (10) d'ensembles d'empilements voisins sont directement adjacentes les unes aux autres de manière à former un plan commun de surfaces d'appui.

14. Installation de conversion d'énergie (24) selon la revendication 13, dans laquelle des empilements (30) adjacents s'étendent dans deux directions latérales.

15. Installation de conversion d'énergie (24) selon la revendication 13 ou 14, dans laquelle les empilements (30) sont encadrés par une façade pour former une structure de bâtiment.
